Europäisches Patentamt

European Patent Office

Office européen des brevets

(11) Publication number: 0 264 229
A2

# EUROPEAN PATENT APPLICATION

(21) Application number: 87308936.1

(22) Date of filing: 08.10.87

(51) Int. Cl.⁴: B01D 13/04

(30) Priority: 15.10.86 GB 8624701

(43) Date of publication of application:
20.04.88 Bulletin 88/16

(84) Designated Contracting States:
CH DE FR GB IT LI

(71) Applicant: The British Petroleum Company p.l.c.
Britannic House Moor Lane
London EC2Y 9BU(GB)

(72) Inventor: Ogden, Ian Kenneth
The B. P. Company p.l.c. Chertsey Road
Sunbury-on-Thames Middlesex TW16 7LN(GB)
Inventor: Rizvi, Azhar Ali
The B. P. Company p.l.c. Chertsey Road
Sunbury-on-Thames Middlesex TW16 7LN(GB)

(74) Representative: Dodding, Robert Anthony et al
BP INTERNATIONAL LIMITED Patents
Division Chertsey Road
Sunbury-on-Thames Middlesex, TW16 7LN(GB)

(54) Process for preparing a polyimide membrane.

(57) Process for the preparation of a thin polyimide membrane in which the defects are plugged by a blocking material. The polyimide is dissolved in a solvent and a film cast on a substrate. The film is immersed in a coagulating medium containing a defect blocking material such as a polyurethane, cellulose acetate, water soluble acrylamide or a siloxane polymer.

EP 0 264 229 A2

# PROCESS FOR PREPARING A POLYIMIDE MEMBRANE

The present invention relates to gas separation and liquid separation and more particularly relates to a process for the fabrication of polyimide separation media.

The separation of gas mixtures into their individual components has numerous applications and the development of membranes processes for these separations has become of increasing importance. The use of membrane processes for gas separation has certain advantages over alternative techniques for example those based on adsorption, absorption and liquefaction. These advantages include potential energy efficiency, compactness, relative simplicity and ease of operation. The modular nature of membrane technology also enables scaling up or reduction of capacity when necessary.

The membranes for the gas separation process are desirably (a) highly permeable to components of the mixture to be separated (b) highly selective for specific components i.e. the specific components have a high permeability relative to other constituents of the gas mixture (c) chemically inert and physically stable and (d) continuous i.e. free from defects such as pinholes. The desired product may be the permeate or non-permeate or both.

Certain polymers appear to have characteristics making them suitable for use in the form of gas separation membranes. However, conventionally prepared polymeric membranes often have low gas permeation rates or poor selectivity, often resulting in uneconomic separation.

Porous defects often occur in the preparation of gas separation membranes. It is known to plug or block these defects in the membrane by use of a coating of a relatively high permeability material to form a composite membrane. For example, the use of suitable materials for plugging the porous defects in membranes is disclosed in US patent number 4230463. However, these coatings are generally applied subsequent to the preparation of the asymmetric polymeric membrane and result in the formation of relatively thick (circa 1 to 50 micron) layers. The present invention relates to an improved method of preparing polyimide membranes which enables the defect plugging to occur during the preparation of the membrane.

Thus according to the present invention there is provided a process for preparing a polyimide membrane comprising the steps of dissolving a polyimide in a solvent, casting the film on a substrate and immersing the film and substrate in a coagulating medium, comprising a defect blocking material.

The preferred polyimide is an engineering polymer of relatively high glass transition temperature Tg such as a polyetherimide or an aromatic or substituted polyimide.

The defect blocking material is preferably a polymer such as polyurethane, cellulose acetate, a water soluble acrylamide or a siloxane polymer, the defect blocking material having a higher permeation rate relative to that of the membrane forming polyimide. The concentration of defect blocking material is preferably in the range 0 - 20% by weight.

It is envisaged that the process may also be applied to enable defect blocking of hollow fibres as well as flat-sheet membranes or films.

Suitable solvent systems include halogenated hydrocarbons, n-methylpyrrolidone and mixtures of the foregoing with dioxane.

Suitable coagulating media include non-solvents for the polyimide such as water, aromatic hydrocarbons, ketones, e.g. acetone, methyl ethyl ketone and certain mixtures of the foregoing. The coagulating medium is a solvent for the defect blocking material being used.

The invention will now be described by way of example only.

An initial 19% wt poly(etherimide)dope solution was prepared by dissolving Ultem 1000 (manufactured by General Electric) indichloromethane/dioxane (3.3/1 wt. wt) solvent. A film of the polymer solution was cast onto a clean glass plate using a 150 micron doctor blade. The film was then left for an evaporation time of 10 seconds at ambient temperature.

The film and substrate were then immersed in a coagulation bath. The coagulating medium was acetone (44.5% by weight), xylene (44.5% by weight), poly (dimethylsiloxane) (PDMS) in the form of Sylgard 184 - a product of Dow Corning (10% by weight), and a proprietary curing agent for the silicone rubber - a product of Dow Corning (1% by weight).

The resultant membrane and substrate were left in the coagulation bath for about five minutes before removal and draining of excess coagulating medium. The membrane and substrate were then placed in an oven at 40°C for 24 hours so as to cure the PDMS layer. The membrane was then detached carefully from the substrate.

Examination of the top surface of the resultant cured membrane showed a distinct 'rubbery' texture indicating the presence of PDMS. Further examination of the top surface by scanning electron microscopy techniques showed no significant defects. A cross section across the membrane showed three layers of zones (i) a thin layer of PDMS rubber (less than 5 microns), (ii) a layer of dense poly(etherimide) (less than 5 microns), and (iii) a layer of porous poly(etherimide) sub-structure (about 35 to 40 microns).

The coatings formed on the membrane by use of the present invention may be relatively thin (of the order 1 micron or less) and therefore it is envisaged that polymer coatings having a lower permeability than PDMS could be used. Conventional coating techniques may not allow such thin coatings to be formed and would be at a disadvantage with respect to the present invention with these less permeable coatings.

Experimental results for $CO_2/CH_4$ permeation rates through polyetherimide films prepared as hereinbefore described showed enhanced separation factors compared to films prepared in a coagulating medium free of defect blocking material.

For example, one such film exhibited a carbon dioxide permeation rate of $4.6 \times 10^{-6}$ and a methane permeation rate of $1.14 \times 10^{-7}$ $cm^3(STP).cm^{-2}.s^{-1}.(cm.Hg)^{-1}$. The ideal separation factor for carbon dioxide/methane was thus 40.4. Films made in a similar process but without defect blocking material in the coagulating medium showed ideal separation factors from 1 to 5.

Further examples of membrane coating conditions and permeation rates are given in Table 1.

Table 1

| PEI Solution conc. % wt | Solvent | Coagulating medium | % blocking polymer in coagulating medium | Permeation Rate $cm^3(STP)/cm^2s(cmHg)$ | | $\alpha \frac{CO_2}{CH_4}$ |
| --- | --- | --- | --- | --- | --- | --- |
| | | | | $CO_2$ | $CH_4$ | |
| 19% | $CH_2Cl_2$/dioxane 3.3:1 | Xylene/acetone 1:1 | 10% PDMS | 4.6E-6 | 1.14E-7 | 41.2 |
| 17% | $CH_2Cl_2$/dioxane 3.3:1 | Xylene/acetone 1:3 | 10% PDMS | 1.3E-6 | 3.78E-8 | 34.4 |
| 30% | NMP:dioxane 1:1 | Xylene/acetone 1:1 | 10% PDMS | 2.38E-7 | 4.71E-9 | 50.7 |
| 30% | $CH_2Cl_2$:dioxane 3.3:1 | MEK | 5% PU | 2.1E-6 | 7.46E-8 | 28.1 |

(PDMS - polydimethyl siloxane : PU - polyurethane)

## Claims

1 Process for preparing a polyimide membrane comprising the steps of dissolving a polyimide in a solvent, casting the film on a substrate and immersing the film and substrate in a coagulating medium comprising a defect blocking material.

2 Process according to claim 1 in which the polyimide is a polyetherimide or an aromatic or a substituted polyimide.

3 Process according to claim 1 or claim 2 in which the defect blocking material is a polyurethane, cellulose acetate, a water soluble acrylamide or a siloxane polymer.

4 Process according to any of the preceding claims in which the solvent is a halogenated hydrocarbon, n-methyl pyrrolidone or a mixture of either with dioxane.

5 Process according to any of the preceding claims in which the coagulating medium is a non-solvent for the polyimide.

6 Process according to claim 5 in which the coagulating medium comprises water, acetone, an aromatic hydrocarbon, a ketone, methyl ethyl ketone or mixtures of the foregoing.

7 Process according to any of the preceding claims in which the polyimide membrane is in the form of a thin film or a hollow fibre.

8 Polyimide membranes whenever prepared by a process according to any of claims 1 to 7.